# EUROPEAN PATENT APPLICATION

(11) **EP 1 491 501 A1**
(43) Date of publication of application: **29.12.2004**
(21) Application number: 03701044.4
(22) Date of filing: 09.01.2003
(51) Int. Cl.: C01G 1/02, C01G 51/00, H01M 4/58, H01M 4/02, H01M 10/40

(54) **CARBON-COVERED LITHIUM TRANSITION METAL OXIDE, SECONDARY CELL POSITIVE ELECTRODE MATERIAL AND SECONDARY CELL**

(30) Priority: 15.03.2002 JP 2002118549
(71) Applicant: MIKUNI SHIKISO KABUSHIKI KAISHA, Himeji-shi, Hyogo 671-0234 (JP)
(72) Inventor: Hisashi, Hideyuki, c/o Mikuni Shikiso K. K., Himeji-shi, Hyogo (JP); Kadowaki, Tetsuji, c/o Mikuni Shikiso K. K., Himeji-shi, Hyogo (JP)
(74) Representative: Hartz, Nikolai F., Dr.
(86) International application number: PCT/JP2003/000132
(87) International publication number: WO 2003/078326

(57) **Abstract**

A carbon-covered lithium transition metal oxide which comprises a lithium transition metal oxide and carbon black attached on the surface thereof, wherein the carbon black covers 80% or more of the lithium transition metal oxide; a carbon-covered lithium transition metal oxide which comprises a lithium transition metal oxide and carbon fiber attached on the surface thereof; and a positive electrode material for a secondary cell which comprises the carbon-covered lithium transition metal oxide.

## Description

### Technical field

The present invention relates to a lithium transition metal oxide with a carbonaceous material such as carbon black or carbon fiber attached thereon, a positive electrode material for secondary cell and a secondary cell. Namely, the present invention relates to a positive electrode active material and a positive electrode containing the same and a secondary cell using the same.

### Background art

The lithium secondary cell is getting attention, as cell phones and laptop personal computers have become widely used. In a lithium secondary cell currently used, to increase its electrode surface for the purpose of improving the efficiency of the cell reaction, a coating material obtained by mixing an electrode active material, a binder and an electroconductive material and the like, is coated on a ribbon-shaped metal foil to obtain a positive electrode and a negative electrode. And the obtained electrodes are rolled together with a separator, then stored in a battery canister.

Generally, the coating material for a positive electrode is obtained by mixing a lithium transition metal oxide as an active material for the positive electrode, a binder, an electroconductive material and the like are mixed by means of a blender and formed into a paste. As an electroconductive material, a carbonaceous material such as a carbon black and the like is used.

However, in such a paste, the mixing of the lithium transition metal oxide and the carbon is not enough, and by coating the mixture, the dispersed state of these materials in the obtained positive electrode is not uniform.

Therefore, the deflection of the lithium transition metal oxide and the carbon occurs, and causes the fluctuation of cell quality and decrease in yield ratio. Especially nowadays, for the reason that a battery pack is used in a car or a personal computer, etc., in which plural cells are connected in series or in parallel, the required level of quality control is becoming stricter and stricter.

Furthermore, because of a bad dispersion between the lithium transition metal oxide and the carbon, the capacity inherent to the material can not be brought out.

Also, because of the decrease in electroconductivity of lithium transition metal oxide, the side reaction of electrolyte solution tends to occur, and causes cyclic degradation.

To handle these problems, as described in Japanese patent application Kokai(laid-open) nos. hei.9-92265 and hei.11-154515, a method in which an active material is covered by carbon black is suggested, for instance. However, by means of such treatment, the bond between the active material and the carbon black is weak, thus the maximum capacity is obtained when the covered ratio is 30%, so it is considered that the enough cell performance is not brought out. Also, the treatment time is as long as several dozens of minutes, so the productivity is low. On the other hand, it is considered that it is necessary to leave a surface of the active material on which the carbon black doesn't cover, but by means of the above described method, it is difficult to control the covered and not covered surface condition. So this point is considered to be another reason why enough cell performance is not obtained.

It is an object of the present invention to improve the dispersibility of a lithium transition metal oxide and a carbon, and to obtain a positive electrode for secondary cell with low quality fluctuation, good yield ratio, high service capacity, and furthermore low cyclic deterioration.

The present invention has been attained by a discovery that the above described object may be attained by utilizing the attachment between powders such as a lithium transition metal oxide and a carbonaceous material such as carbon black or carbon fiber, and by use of a lithium transition metal oxide with the carbonaceous material attached effectively.

### Description of the invention

Thus, the present invention resides in:
(1) A carbon-covered lithium transition metal oxide in which a carbon black is attached to the surface of a lithium transition metal oxide, characterized in that said carbon black covers at least 80% of the lithium transition metal oxide.
(2) A lithium transition metal oxide according to the above item (1) characterized in that the carbon black is one from ketchen black and acetylene black.
(3) A lithium transition metal oxide according to the above items (1) or (2) characterized in that the carbon black is from 0.5 to 15 parts by weight related to 100 parts by weight of the lithium transition metal oxide.
(4) A lithium transition metal oxide according to any one of the above items (1) to (3) characterized in that the carbon black is from 4 to 9 parts by weight related to 100 parts by weight of the lithium transition metal oxide.
(5) A lithium transition metal oxide according to any one of the above items (1) to (4) characterized in that the carbon black is attached by means of a dry method.
(6) A lithium transition metal oxide according to any one of the above items (1) to (5) characterized in that the carbon black is attached by means of a fast gas stream impulse system.
(7) A carbon-covered lithium transition metal oxide in which a carbon fiber is attached on the surface of a lithium transition metal oxide.
(8) A lithium transition metal oxide according to the above item (7) characterized in that the carbon fiber is a fiber shaped graphite.
(9) A lithium transition metal oxide according to the above items (7) or (8) characterized in that the fiber length of the carbon fiber is from 1 to 50µm.
(10) A lithium transition metal oxide according to any one of the above items (7) to (9) characterized in that the carbon fiber is from 0.1 to 10 parts by weight related to 100 parts by weight of the lithium transition metal oxide.
(11) A lithium transition metal oxide according to any one of the above items (7) to (10) characterized in that the carbon fiber is attached by means of a dry method.
(12) A lithium transition metal oxide according to any one of the above items (7) to (11) characterized in that the carbon fiber is attached by means of a fast gas stream impulse system.
(13) A lithium transition metal oxide according to any one of the above items (1) to (12) characterized in that said lithium transition metal oxide is at least one from the lithium cobalt oxide, lithium manganese oxide, lithium nickel oxide and lithium iron oxide manganese oxide.
(14) A material for a positive electrode for a secondary cell made of a lithium transition metal oxide according to any one of the above items (1) to (13).
(15) A material for a positive electrode for a secondary cell obtained by mixing a lithium transition metal oxide according to any one of the above items (1) to (13) with a binder, and coating onto a metal foil.
(16) A secondary cell characterized in that a lithium transition metal oxide according to any one of the above items (1) to (13) is used as a positive electrode.

Now, the present invention is described in detail below.

By means of the present invention, because a carbonaceous powder is attached onto the lithium transition metal oxide, the uniformity of the dispersed state of each component in the coating layer, is improved, and the electroconductivity to the active material is improved, so the cell performance is improved dramatically compared to when a lithium transition metal oxide and a carbonaceous material are mixed by means of a conventional method. Also, especially by means of a process using the fast gas stream impulse method, because a bigger impulse is given to the carbon black and to the active material to be attached, an electroconductive path with low resistivity from the active material may be formed. Also, by using a carbon fiber, plural particles of active material may be strung together by means of the carbon fiber so that a long electroconductive path may be formed. Furthermore, a bare surface not covered by carbon black or carbon fiber may be decreased to the utmost and it may be covered uniformly, so the uniformity of the electric loading may be improved, and the in and out of the lithium ion is facilitated, and high lithium ion conductivity may be secured. Furthermore, a carbon covered lithium transition metal oxide may be easily dispersed into a resin, so the mixing process may be simplified. Also, the amount of a binder resin may be brought down, so that the cell capacity may be increased. Furthermore the coating strength may be improved.

### Brief description of the drawings

Figure 1 shows an electron microscopic picture (10000 times) cobalt oxide lithium with carbon black attached thereto, obtained in Example 1.

Figure 2 shows an electron microscopic picture (10000 times) cobalt oxide lithium with carbon black attached thereto, obtained by Example 1.

Figure 3 shows an electron microscopic picture (10000 times) cobalt oxide lithium with carbon black attached thereto, obtained in Example 3.

Figure 4 shows an electron microscopic picture (10000 times) cobalt oxide lithium with carbon black attached thereto, obtained in Example 4.

Figure 5 shows an electron microscopic picture (10000 times) of "Cellseed-5".

Figure 6 shows an electron microscopic picture (12000 times) of cobalt oxide lithium with carbon fiber attached thereto, obtained in Example 8.

As a lithium transition metal oxide used as an active material for a positive electrode, any one known in the art may be used. For example, one selected from cobalt oxide lithium, manganese oxide lithium, nickel oxide lithium, cobalt nickel oxide lithium, lithium iron oxide oxidized manganese, magnesium doped cobalt oxide lithium are preferable. Especially, cobalt oxide lithium is preferable, because the obtained cell capacity is high and cyclic property is especially excellent.

A carbon black to be used to be attached is not particularly limited, but it is preferable to use a ketchen black or an acetylene black, as the obtained cell capacity is high and the cyclic property is especially excellent.

Also, a carbon black graphitizing-treated under at least 2000°C may be used alone or mixed with other carbon black.

A blending ratio between an active material and a carbon black is not particularly limited, but it is preferable that it is from 0.5 to 15 parts by weight of carbon black to 100 parts by weight of the active material, and it is even more preferable that it is from 4 to 9 parts by weight of carbon black. If the ratio of carbon black is too low, the electroconductivity is low so the cell property lowers. And if the ratio of carbon black is too high, the covering becomes uneven and the cell property lowers. The degree of covering is preferably at least 80%, more preferably at least 95%, even more preferably in a completely covered state. The higher the covered ratio is, the higher the electroconductivity is, and the cell property improves.

The covered ratio may be determined, for example by making a map of the surface of the active material by means of EPMA analysis, and by comparing the carbon amount before and after the covering treatment.

Further, a carbon fiber may be attached. A carbon fiber can perform the role of connecting electrically the active material. Because of this, the electroconductivity may be improved further.

When a carbon black and a carbon fiber are attached, they may be mixed in advance and then the obtained mixture may be attached to the active material. It has an advantage that it may be covered in a state that the carbon black and the carbon fiber are more uniformly mixed. Of course, one of carbon black and carbon fiber may be attached first, then the other one may be attached.

A carbon fiber to be used for the covering is not particularly limited, but the preferable length is from 1 to 50 µm, more preferable length is from 1 to 20µm, and even more preferable length is from 1 to 15µm. The diameter of the carbon fiber is not particularly limited either, but the preferable diameter is at least 1µm, and the more preferable diameter is at least 0.5µm.

The carbon fiber plays the role of electrically connecting the active material between each other. Consequently, even if the contact between the big size particles of active material is not enough, the electrical contact may be complemented by the carbon fiber. However, if the amount of carbon fiber is too much, the density of the positive electrode lowers, and it becomes difficult to form an electrode. So, the mixing ratio is from 0.5 to 10 parts by weight to 100 parts by weight of the active material. Also, as a carbon fiber, a graphitized, fiber shaped graphite may be used.

As described above, in a positive electrode of the present invention to be used in a lithium ion secondary cell, a positive material is covered by a carbonaceous material such as carbon black or carbon fiber, and consequently, compared to when mixed by themselves, the electroconductivity and lithium ion conductivity of the positive electrode may be drastically improved.

As the method of producing a lithium transition metal of the present invention covered by a carbonaceous material such as carbon black or carbon fiber, it is especially preferable to cover by dry blending the lithium transition metal and the carbonaceous material. To conduct this method, any of the known dry powder blending machines such as "Hybridization" system (manufactured by Nara Kikai Seisakusho K.K.), "Cosmos" (manufactured by Kawasaki Juko K.K.), "Mechanofusion" system (manufactured by Hosokawa Micron K.K.), "Surfusing" system (manufactured by Nippon Newmatic Industries Ltd.), "Mechano-mill", "Speed-kneader", "Speedmill", "Spira-Coater" (manufactured by Okada Seikou K.K.) may be used (refer to "Funtai to Kougyou, 19,11,1989"). Especially, "Hybridization" system (manufactured by Nara Kikai Seisakusho K.K.) that is a fast gas stream impulse system, is preferable.

"Hybridization" system constitutes mainly of a hybridizer consisting of a rotor revolving in a high speed, a stator and a circuit. The material to be treated, thrown into the hybridizer, is repeatedly subjected to a mechanical effect such as compression, attrition and shearing stress, mainly constituted of an impulsive force. The method using the "Hybridization" system gives a big impulse to the particles. Compared to a compression shearing stress by a mechano-treatment such as one described in Japanese Laid-open No.hei 9-92265, the impulse by the present method is by far bigger and a local temperature may elevate to around 1000 °C, therefore a mechano-chemical reaction may occur, and there is an advantage such that the attachment of the carbonaceous material to the lithium transition metal oxide may be by far stronger.

The method of attaching a carbonaceous material to a lithium transition metal oxide by Hybridization system may not be limited, and a method by Hybridization system generally used as treatment of powder may be used. More specifically, a carbonaceous material and a lithium transition metal oxide are put in the machine, and are treated for about a several minutes to ten minutes, with peripheral velocity of about several dozens to several hundreds meters per second, so that the carbonaceous material may be attached onto the lithium transition material, effectively even in a short time. When compared to a mechano-treatment such as described in Japanese patent application Kokai(laid-open) no. hei 9-92265 that requires a long time, the present method only requires an extremely short time. Specifically, when cobalt oxide lithium and ketchen black of weight ratio of 95 to 5 are treated, by means of "Hybridization" system it requires only about 3 minutes, but by the mechano-treatment of Japanese patent application Kokai(laid-open) no. hei 9-92265 it requires about 30 minutes.

When attaching is conducted by means of an impulse type powder blending machine, enough coating can be obtained with only a lithium transition metal oxide and a carbonaceous material, but a combined coating may obtained by adding a carbon black, a resin, an electrolyte. Plural layers of each of carbon black, carbon fiber, resin and electrolyte may be obtained, but a layer of uniform mixture of carbon black, carbon fiber, resin and electrolyte may also be obtained, and a large variety of coating may be obtained. As a resin, for example, it may be a polymer such as: polyvinylidene fluoride, polyvinylidene fluoride-tetrafluoroethylene copolymer, polyethylene oxide, polypropylene oxide, polyacrylonitrile, polymethyl methacrylate. As an electrolyte, it may be for example: LiClO₄, LiAsF₆, LiPF₆, LiBF₄, LiB(C₆H₅)₄, LiCl, LiBr, LiI, LiCH₃SO₃, LiCF₃SO₃, LiN(CF₃SO₂)₂, LiAlCl₄. Consequently, it is possible to design a huge variety of active material, and higher lithium ion conductivity and a higher resistance to electrolyte can be obtained, thus the cell property can be improved. Also, the bond of the attached material to the active material can be improved.

Also, the carbon covered lithium transition metal oxide of the present invention, as described below, may be utilized in a variety of composition of cell.

As a negative electrode active material, any of the known active material as negative electrode may be used, for example, carbon material such as natural graphite, coke, glassy carbon; silicon, metal lithium, and metal such as aluminum that is able to form an alloy with metal lithium.

As an electrolyte to form a cell with a carbon covered lithium transition metal oxide of the present invention, there are for example, a nonaqueous electrolyte obtained by solving a lithium compound to a nonaqueous solvent, or a solid polymer electrolyte obtained by solving a lithium compound to a polymer or by holding an organic solvent where a lithium compound is solved. A nonaqueous electrolyte may be adjusted by combining accordingly an organic solvent and an electrolyte, and as an organic solvent and as an electrolyte, any one which may be used in such type of cell may be used. As an organic solvent, there are for example: propylene carbonate, ethylene carbonate, vinylene carbonate, dimethyl carbonate, diethyl carbonate, methyl ethyl carbonate, 1,2-dimethoxyethane, 1,2-diethoxyethane methyl formate, butyrolactone, tetrahydrofuran, 2-methyl tetrahydrofuran, 1,3-dioxofuran, 4-methyl-1,3- dioxofuran, diethyl ether, sulfolane, methyl sulfolane, acetonitrile, propeonitrile, butylonitrile, valeronitrile, benzonitrile, 1,2-dichloroethane, 4-methyl-2-pentanone, 1,4-dioxane, anisole, diglaim, dimethylformamide, dimethylsulfoxide, and the like. These solvents may be used alone or in combination of two or more.

A carbon covered lithium transition metal oxide of the present invention may be applied to a lithium gel polymer cell. Examples of a solid polymer electrolyte to form a cell include: polyvinylidene fluoride, polyvinylidene fluoride- tetrafluoroethylene copolymer, polyethylene oxide, polypropylene oxide, polyacrylonitrile, poly methyl methacrylate and the like and a nonaqueous electrolyte holded thereto.

### Examples

### Example 1

The present invention is further illustrated by the following examples of the invention. As an active material, "Cellseed C-5" (manufactured by Nihon Kayaku Kougyou K.K.) was used. As a carbon black, Ketchen black (manufactured by Lion K.K.) was used.

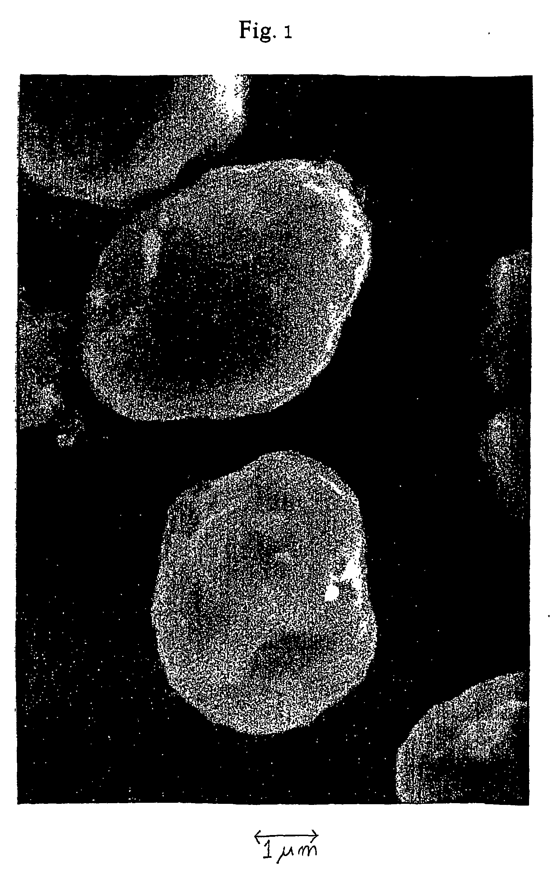

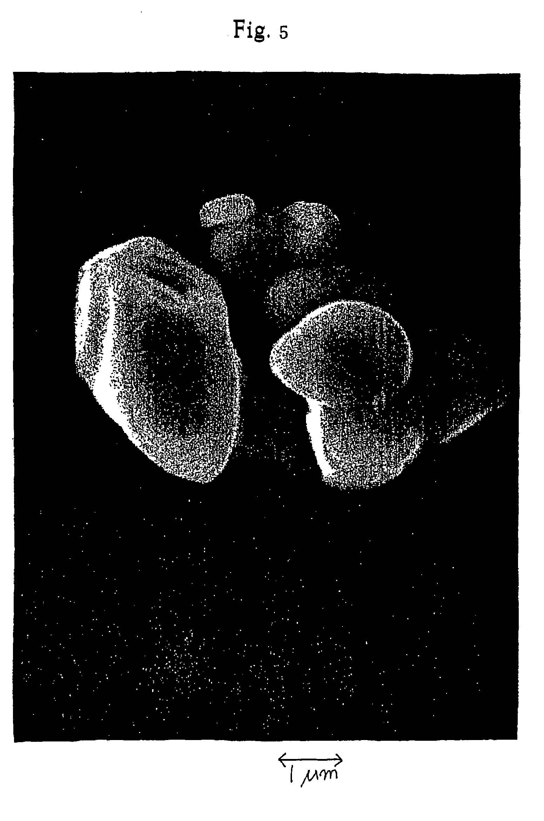

The above active material and the above carbon black in the weight ratio of 96 to 4, were treated in "Hybridizer"(manufactured by Nara Kikai Seisakusho K.K.), by giving impulse in a fast gas stream. The treatment condition was as follows: peripheral speed was 100m/sec, treatment time was 5 minutes. The obtained matter was observed by an electron microscope, and the covered ratio was determined by EPMA analysis, then it was confirmed that a product which the carbon black covered completely its surface was obtained. Figure 1 shows its electron micrograph by secondary electron image (magnification rate:10000 times). Figure 5 shows an electron micrograph by secondary electron image of "Cellseed C-5" before the covering treatment, and by comparing the electron macrograph of Figure 1 with that of Figure 5, it can be observed that the carbon black covers completely the surface of the active material.

### Examples 2 to 7

Other examples are further illustrated below. As an active material, one from "Cellseed" C-2K, C-5, and C-10 (manufactured by Nippon Kagaku Kougyou K.K.) was used. As a carbon black, "Ketchen black ECP"(manufactured by Lion K.K.) or "Acetylene black HS-100"(manufactured by Denki Kagaku Kougyou K.K.) was used. The treatment condition is shown in the following table.

| | active material | carbon black | weight ratio | treatment time by Hybridizer |
|---|---|---|---|---|
| Example 2 | Cellseed C-5 | Ketchen black ECP | 92 to 8 | 5 min |
| Example 3 | Cellseed C-5 | Acetylene black HS-100 | 96 to 4 | 5 min |
| Example 4 | Cellseed C-5 | Acetylene black HS-100 | 92 to 8 | 5 min |
| Example 5 | Cellseed C-2K | Ketchen black ECP | 95 to 5 | 3 min |
| Example 6 | Cellseed C-5 | Ketchen black ECP | 95 to 5 | 3 min |
| Example 7 | Cellseed C-10 | Ketchen black ECP | 95 to 5 | 3 min |

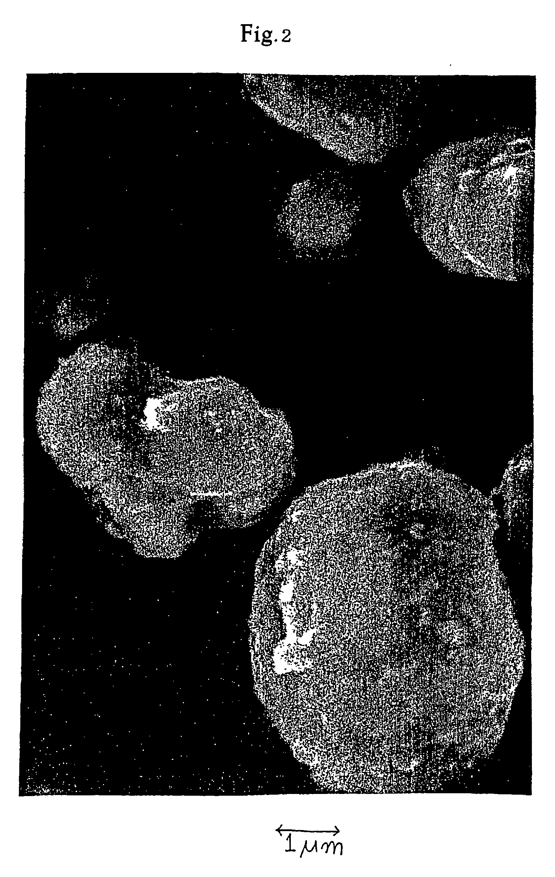

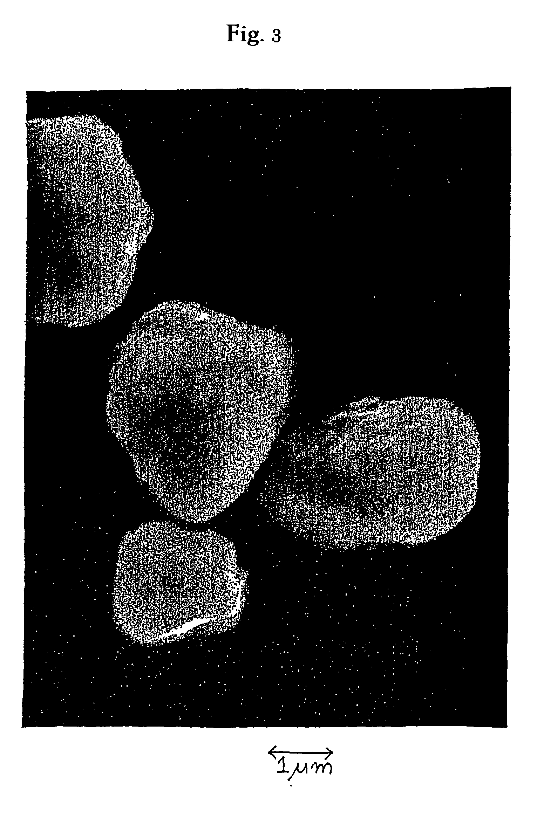

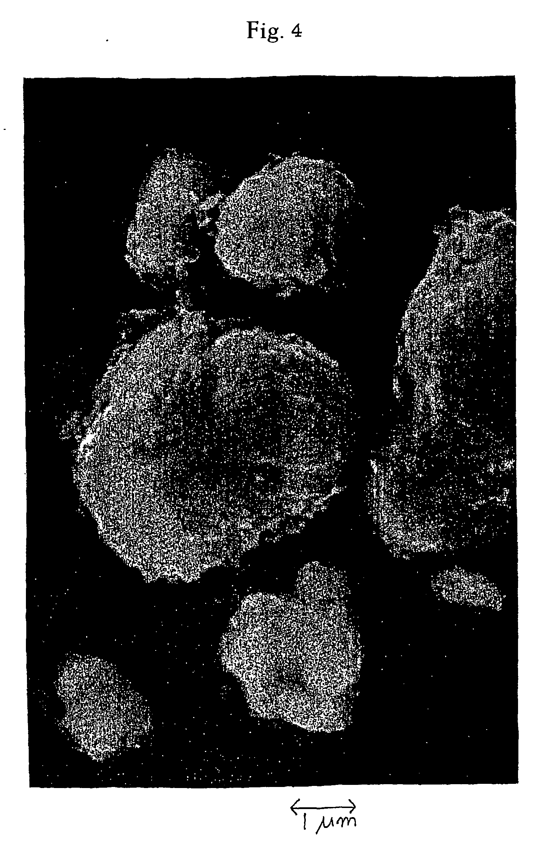

The electron micrographs of the cobalt oxide lithium covered by carbon black obtained in the Examples 2 to 4 are shown in Figures 2 to 4. The covering ratios were determined by EPMA analysis, and it was confirmed that any of the obtained product had its surface completely covered by carbon black. Also by observing the electron micrograph, it was confirmed that carbon black completely covered the surface of the active material.

### Example 8

As the active material, Cellseed C-5(manufactured by Nippon Kagaku Kougyou K.K.) was used. As the carbon fiber, VGCF(graphitized, with fiber length of from 10 to 20 µm, aspect ratio of from 10 to 500, manufactured by Showa Denko K.K.) was used.

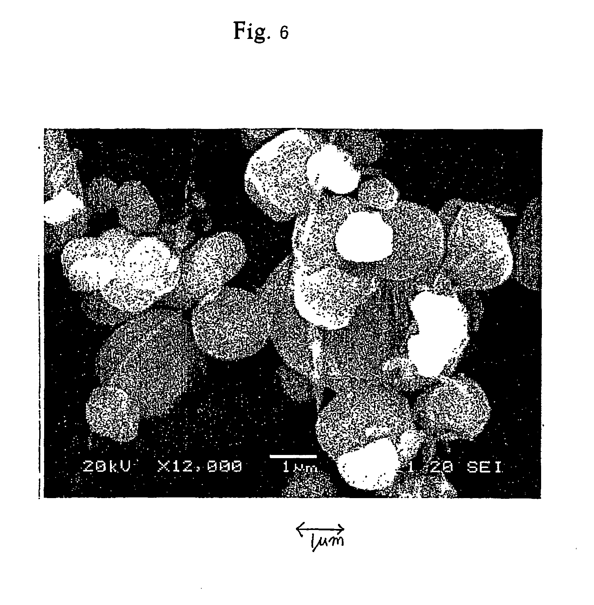

The above active material and the above carbon fiber in the weight ratio of 98 to 2 were treated by means of Hybridizer (manufactured by Nara Kikai Seisakusho K.K.) by giving impulse in a fast gas stream. The treatment condition was as follows: peripheral speed was 100m/sec, treatment time was 3 minutes. The obtained matter was observed by an electron microscope, and it was confirmed that a product which carbon fiber is attached to its surface was obtained. Figure 6 shows an electron micrograph (magnification rate:6000 times). It was observed that the carbon fiber bonded plural particles of active material. As the carbon fiber is attached firmly to the active material, and furthermore the network between the active material is formed, the improvement of electroconductivity is expected. Also, as there is also the bare surface of the active material, high lithium ion conductivity is secured.

### Industrial Applicability

According to the present invention, lithium transition metal oxide can be covered all over its surface, firmly, by a carbonaceous powder in a short time treatment. Therefore, in the coating, the distribution uniformity between each component is improved, and the electroconductivity to the active material is improved, and when compared to stirring and mixing the lithium transition metal oxide and the carbonaceous material by a conventional method, the cell property is improved drastically. Furthermore, the mixing process can be simplified. Also, the amount of the binder resin may be reduced, therefore the capacity may be increased. Also, the strength of the coating increases.

According to the present invention, the dispersibility of the lithium transition metal oxide and the carbonaceous powder is improved, and the quality fluctuation of the cell is reduced, the yield is good, and a secondary cell with high service capacity and at the same time with low cyclic deterioration may be obtained.

## Claims

1. A carbon-covered lithium transition metal oxide in which a carbon black is attached to the surface of a lithium transition metal oxide, **characterized in that** said carbon black covers at least 80% of the lithium transition metal oxide.

2. A lithium transition metal oxide according to the Claim 1 **characterized in that** the carbon black is one from ketchen black and acetylene black.

3. A lithium transition metal oxide according to the Claims 1 or 2 **characterized in that** the carbon black is from 0.5 to 15 parts by weight related to 100 parts by weight of the lithium transition metal oxide.

4. A lithium transition metal oxide according to any one of the Claims 1 to 3 **characterized in that** the carbon black is from 4 to 9 parts by weight related to 100 parts by weight of the lithium transition metal oxide.

5. A lithium transition metal oxide according to any one of the Claims 1 to 4 **characterized in that** the carbon black is attached by means of a dry method.

6. A lithium transition metal oxide according to any one of the Claims 1 to 5 **characterized in that** the carbon black is attached by means of a fast gas stream impulse system.

7. A carbon-covered lithium transition metal oxide in which a carbon fiber is attached on the surface of a lithium transition metal oxide.

8. A lithium transition metal oxide according to the Claim 7 **characterized in that** the carbon fiber is a fiber shaped graphite.

9. A lithium transition metal oxide according to the Claims 7 or 8 **characterized in that** the fiber length of the carbon fiber is from 1 to 50µm.

10. A lithium transition metal oxide according to any one of the Claims 7 to 9 **characterized in that** the carbon fiber is from 0.1 to 10 parts by weight related to 100 parts by weight of the lithium transition metal oxide.

11. A lithium transition metal oxide according to any one of the Claims 7 to 10 **characterized in that** the carbon fiber is attached by means of a dry method.

12. A lithium transition metal oxide according to any one of the Claims 7 to 11 **characterized in that** the carbon fiber is attached by means of a fast gas stream impulse system.

13. A lithium transition metal oxide according to any one of the Claims 1 to 12 **characterized in that** said lithium transition metal oxide is at least one from the lithium cobalt oxide, lithium manganese oxide, lithium nickel oxide and lithium iron oxide manganese oxide.

14. A material for a positive electrode for a secondary cell made of a lithium transition metal oxide according to any one of the Claims 1 to 13.

15. A material for a positive electrode for a secondary cell obtained by mixing a lithium transition metal oxide according to any one of the Claims 1 to 13 with a binder, and coating onto a metal foil.

16. A secondary cell **characterized in that** a lithium transition metal oxide according to any one of the Claims 1 to 13 is used as a positive electrode.
